# EUROPÄISCHE PATENTSCHRIFT

(11) **EP 3 974 694 B1**
(45) Veröffentlichungstag und Bekanntmachung des Hinweises auf die Patenterteilung: **06.03.2024**
(21) Anmeldenummer: 21198778.9
(22) Anmeldetag: 24.09.2021
(51) Int. Cl.: F16L 9/19, F16L 59/02, F16L 59/10, F16L 59/14, F16L 11/15, F16L 59/153

(54) **THERMISCH GEDÄMMTE ROHRANORDNUNG**
THERMALLY INSULATED PIPE ASSEMBLY
AGENCEMENT DE TUBE À ISOLATION THERMIQUE

(30) Priorität: 25.09.2020 DE 202020105488 U
(43) Veröffentlichungstag der Anmeldung: 30.03.2022
(73) Patentinhaber: REHAU Industries SE & Co. KG, 95111 Rehau (DE)
(72) Erfinder: Gottschalk, Daniel, 90765 Fürth (DE); Kirsch, Stefan, 91560 Heilsbronn (DE); Meyer, Michael, 85072 Eichstätt (DE); Winter, Karlheinz, 95111 Rehau (DE); Wunderlich, Peter, 95138 Bad Steben OT Thierbach (DE)

(56) Entgegenhaltungen:
- EP-A1- 1 010 933
- EP-B1- 2 953 776
- DE-U1-202017 107 801

## Beschreibung

Die vorliegende Erfindung betrifft eine thermisch gedämmte Rohranordnung.

Weiterhin betrifft die Erfindung ein Wärmeverteilsystem mit einer thermisch gedämmten Rohranordnung.

Thermisch gedämmte Rohranordnungen finden insbesondere Anwendung in Nahwärmenetzen, wo von einem Wärmeerzeuger Wärmeenergie einem Wärmeverbraucher zuzuleiten ist. Hierzu wird beispielsweise erwärmtes Fluid, insbesondere Wasser, durch thermisch gedämmte Rohranordnungen geleitet, wodurch der Wärmeverlust bei der Leitung gering gehalten werden kann.

Bekannt sind gattungsgemäße thermisch gedämmte Rohranordnungen, die aus mindestens einem ein Fluid führendes Medienrohr, einer Wärmedämmung aus beispielsweise einem Polymerschaum und einem Außenmantel bestehen, der oftmals als Wellrohr ausgeführt ist. Beispielsweise beschreibt die EP 1 010 933 A1 eine solche Rohranordnung, in der vier Innenrohre in eine Wärmedämmschicht eingebettet sind, die von einer Kunststofffolie umgeben ist, auf die ein Kunststoffmantel mit einem Wellprofil aufextrudiert ist. Thermisch gedämmte Rohranordnungen mit einer ersten und einer zweiten Dämmschicht sind aus der EP 2 953 776 B1 und der DE 20 2017 107 801 U1 bekannt.

Nachteilig bei diesen Ausführungen ist, dass im Baustellenbetrieb eine derartige Rohranordnung schnell beschädigt werden kann, indem beispielsweise der Außenmantel durchstoßen wird.

In diesem Fall kann nicht mehr sichergestellt werden, dass Bodenfeuchtigkeit oder Regen- oder Grundwasser in die Rohranordnung eindringt und die Wärmedämmwirkung beeinträchtigt.

In solchen Fällen kann es auch dazu kommen, dass ein Wärmeverteilsystem teilweise oder ganz voll Wasser läuft und damit unbrauchbar wird, was hohe Sanierungskosten nach sich zieht.

Es ist auch möglich, dass durch eine solche beschädigte Rohranordnung Wasser in ein Gebäude eindringt und so hohe Schäden verursacht, wenn die Rohranordnung mit einem Gefälle zum Gebäude hin verlegt ist.

Hier setzt die Erfindung ein, deren Aufgabe es ist, eine thermisch gedämmte Rohranordnung bereitzustellen, das die geschilderten Nachteile überwindet, indem die Ausbreitung von Wasser im Falle einer Beschädigung des Außenmantels unterbunden ist, und eine ausreichende Flexibilität bei gleichzeitig hoher Robustheit sicherstellt.

Eine weitere Aufgabe der Erfindung besteht darin, ein Wärmeverteilsystem anzugeben.

Die Lösung der ersten Aufgabe der Erfindung erfolgt durch eine thermisch gedämmte Rohranordnung gemäß Anspruch 1.

Die Erfindung stellt dazu eine thermisch gedämmte Rohranordnung zur Verfügung, die wenigstens ein Medienrohr zur Aufnahme, Speicherung oder Leitung eines Fluids, ein das wenigstens eine Medienrohr umgebendes Wellrohr als äußere Hülle, wobei das Wellrohr Wellrohrtäler und Wellrohrberge aufweist, eine erste Dämmschicht, die das wenigstens eine Medienrohr radial vollständig umhüllt, eine zweite Dämmschicht, die unterschiedlich zur ersten Dämmschicht ist und die erste Dämmschicht radial vollständig umhüllt, wobei die zweite Dämmschicht an ihrer von der ersten Dämmschicht abgewandten Außenoberfläche mit mindestens 30 % der Wellrohrinnenoberfläche des Wellrohrs bevorzugt im Bereich der Wellrohrtäler radial vollständig umlaufend fluiddicht verbunden ist, umfasst.

Durch diesen Aufbau der thermisch gedämmten Rohranordnung gemäß vorliegender Erfindung werden die vorstehend geschilderten Nachteile des Standes der Technik im Falle einer Beschädigung des Außenmantels überwunden, ebenso wird eine ausreichende Flexibilität bei gleichzeitig guter Robustheit der Rohranordnung erreicht.

Es kann sich im Rahmen der vorliegenden Erfindung als überaus vorteilhaft erweisen, wenn vorgesehen ist, dass die thermisch gedämmte Rohranordnung derartig ausgebildet ist, dass die fluiddichte Verbindung der zweiten Dämmschicht mit dem Wellrohr eine Verschweißung und / oder eine Verklebung ist.

Durch eine Verschweißung oder Verklebung der zweiten Dämmschicht mit dem Wellrohr kann eine besonders fluiddichte Verbindung zwischen der zweiten Dämmschicht und dem Wellrohr bereitgestellt werden, so dass bei einer Beschädigung eindringendes Wasser nicht weitergeleitet wird.

Als sehr günstig kann sich bei der vorliegenden Erfindung erweisen, wenn vorgesehen ist, dass die thermisch gedämmte Rohranordnung derartig ausgeführt ist, dass die erste Dämmschicht ein PUR-Schaum ist.

Der Schaum kann geschlossenzellig ausgebildet sein und behindert allein dadurch bereits den Weitertransport von Wasser im Falle einer Beschädigung der thermisch gedämmten Rohranordnung. Durch die geringe Dichte (ca. 0,1 bis 0,8 kg/l) und die geringe Wärmeleitfähigkeit (ca. 0,02 bis 0,10 W/mK) wird durch den Schaum eine Wärmedämmung erreicht, wodurch die Abkühlung des zu transportierenden Mediums wirkungsvoll verhindert werden kann.

Bei der vorliegenden Erfindung kann in einer vorteilhaften Ausbildung vorgesehen sein, die thermisch gedämmte Rohranordnung so auszugestalten, dass die zweite Dämmschicht eine PE-Schaumfolie ist.

Die zweite Dämmschicht in Form einer PE-Schaumfolie und ganz besonders bevorzugt als PE-Schaumfolie aus einem geschlossenzelligen PE-Schaum kann die Ausbreitung von Wasser in den Dämmschichten der thermisch gedämmten Rohranordnung im Falle einer Beschädigung in ganz besonderem Maße verhindern oder zumindest erheblich reduzieren.

Als besonders günstige Fortentwicklung der vorliegenden Erfindung kann vorgesehen sein, die thermisch gedämmte Rohranordnung so auszubilden, dass bevorzugt mindestens 40 % und besonders bevorzugt mindestens 50 % der Wellrohrinnenoberfläche des Wellrohrs mit der zweiten Dämmschicht verbunden sind. In Versuchen konnte gezeigt werden, dass dadurch eine Ausbreitung von Wasser in einer beschädigten thermisch gedämmten Rohranordnung wirksam verhindert bzw. weitestgehend eingeschränkt ist.

Durch die vorstehend genannten Maßnahmen ist eine besonders sichere Sperre gegen das unkontrollierte Ausbreiten von Feuchtigkeit oder Wasser in der thermisch gedämmten Rohranordnung bereitgestellt.

Die thermisch gedämmte Rohranordnung der vorliegenden Erfindung kann in günstiger Weise weiterentwickelt werden, wenn 2, 3 oder 4 Medienrohre im Wellrohr vorgesehen sind. Hierdurch kann eine thermisch gedämmte Rohranordnung bereitgestellt werden, die nach den Spezifikationen des Kunden oder der anzuwendenden Technik ausgebildet ist. Auf diese Weise kann insbesondere die Transportkapazität einer solchen thermisch gedämmten Rohranordnung durch den gleichzeitigen Transport eines hohen Fluidvolumens durch mehrere Medienrohre erhöht werden und damit entsprechend auch die übertragene Wärmemenge.

Als besonders vorteilhaft kann sich bei der vorliegenden Erfindung ergeben, wenn die thermisch gedämmte Rohranordnung so ausgeführt ist, dass das wenigstens eine Medienrohr und / oder das Wellrohr aus einem Polymermaterial bestehen oder ein solches enthalten, wobei das Polymermaterial ausgewählt ist aus einem Thermoplasten, insbesondere aus einem Polyolefin, und besonders bevorzugt aus einem Polypropylen, einem Polyethylen oder einem vernetzten Polyethylen.

Das Wellrohr der erfindungsgemäßen thermisch gedämmten Rohranordnung kann in einer bevorzugten Ausführung der Erfindung aus einem vernetzten oder unvernetzten Polyethylen (PE) oder Polyethylen-Copolymeren, in einer vorteilhaften Ausführungsform aus geschäumtem Polyethylen mit einer Dichte von etwa 500 kg/m³ bestehen oder ein solches enthalten. Das Wellrohr ist im letzten Fall bei gleichbleibender Flexibilität im Vergleich zu einem ungeschäumten Wellrohr robuster und trägt zusätzlich zur Wärmedämmwirkung bei.

Die Erfindung kann auch Ausführungsformen der Erfindung umfassen, die wenigstens eine Sperrschicht an oder in dem Wellrohr, an oder in der Dämmschicht oder an oder in einem

Abschnitt der Dämmschicht oder an oder in dem Medienrohr aufweist, die insbesondere die Diffusion von Sauerstoff oder Wasserdampf oder Kohlenwasserstoffen be- oder verhindern sollen. Diese Sperrschichten können insbesondere polymeres, metallisches oder anorganisches Material enthalten.

In einer weiter bevorzugten Ausführungsform der vorliegenden Erfindung kann die thermisch gedämmte Rohranordnung wenigstens einen elektrisch leitenden Abschnitt, der der Leck- bzw. Feuchtedetektion und / oder Signalübermittlung dient, umfassen.

Damit kann ein Versagen der Dämmfunktion, beispielsweise durch eindringendes Wasser, zuverlässig detektiert werden.

Bei der vorliegenden Erfindung kann es sich als überaus vorteilhaft erweisen, wenn vorgesehen ist, dass die thermisch gedämmte Rohranordnung in einem Coextrusionsverfahren oder einem Postcoextrusionsverfahren oder einem mehrstufigen Verfahren hergestellt ist.

Ein solches Coextrusionsverfahren zur Herstellung der thermisch gedämmten Rohranordnung der vorliegenden Erfindung kann insbesondere in mehreren Schritten durchführbar sein. So kann in einem ersten Schritt ein Medienrohr durch einen Extrusionsvorgang bereitgestellt werden, das in einem zweiten Schritt von einem ersten Thermodämmmaterial umhüllt wird. Als Thermodämmmaterial kann beispielsweise eine dünne Platte eines geschäumten PUR-Polymermaterials um das Medienrohr herumgelegt werden und beispielsweise an den Stoßkanten verklebt oder verschweißt werden. Es sind aber auch andere Techniken der Umhüllung des Medienrohrs mit einem Thermodämmmaterial möglich. Insbesondere ist es auch möglich, die erste Dämmschicht aus PUR-Schaum durch Reaktion der den PUR-Schaum bildenden Komponenten direkt auf dem Medienrohr zu erzeugen. Auf diese Weise ist die erste Dämmschicht bereitgestellt. In einem dritten Schritt kann die bereits vorhandene erste Dämmschicht von einem zweiten Thermodämmmaterial umhüllt werden. Als Thermodämmmaterial kann beispielsweise eine Folie eines geschäumten geschlossenzelligen PE-Polymermaterials um die erste Dämmschicht herumgelegt werden und beispielsweise an den Stoßkanten verklebt oder verschweißt werden. Es sind aber auch andere Techniken der Umhüllung der ersten Dämmschicht mit einem zweiten Thermodämmmaterial möglich. Damit ist die zweite Dämmschicht der erfindungsgemäßen thermisch gedämmten Rohranordnung bereitgestellt. In einem vierten Schritt kann das Wellrohr durch einen Extrusionsvorgang angeordnet und dabei die fluiddichte Verbindung zwischen der Wellrohrinnenoberfläche und der zweiten Dämmschicht hergestellt werden.

Die thermisch gedämmte Rohranordnung der vorliegenden Erfindung kann auf diese Weise in besonders einfacher und schneller sowie kostengünstiger Herstellungstechnik bereitgestellt werden.

In einer alternativen Herstelltechnik kann vorgesehen sein, das das Wellrohr und / oder das Medienrohr und / oder der die erste Dämmschicht und / oder die zweite Dämmschicht ganz oder zum Teil nach einem Fertigungsverfahren hergestellt ist, wobei das Herstellverfahren ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen kann. Das Fertigungsverfahren kann ein generatives Freiraumverfahren, insbesondere Auftragsschweißen, Wax Deposition Modeling (WDM), Contour Crafting, MetallPulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die zweite Aufgabe der Erfindung ist durch den Gegenstand des Anspruchs 8 gelöst.

Ein Wärmeverteilsystem ist dann gegenüber einem solchen nach dem Stand der Technik verbessert, wenn vorgesehen ist, dass eine thermisch gedämmte Rohranordnung, wie vorstehend beschrieben, für dessen Bau genutzt ist.

Ein solches Wärmeverteilsystem ist insbesondere hinsichtlich Stabilität, Dauerhaftigkeit und der Ausbreitung von Feuchtigkeit oder Wasser im Polymerschaum der thermisch gedämmten Rohranordnung verbessert bzw. geschützt.

Anwendung findet die thermisch gedämmte Rohranordnung der vorliegenden Erfindung beim Transport eines Fluids als Wärmeträger in Nah- und Fernwärmenetzen. Daneben gibt es weitere Anwendungsfelder in der Industrie, in der Getränke- und Lebensmittelindustrie, in der Landwirtschaft und in weiteren Bereichen.

Die erfindungsgemäße thermisch gedämmte Rohranordnung kann auch Anwendung im Bauwesen, in der Medizintechnik, in der Pharmatechnik, in der Fischzucht oder in der Kraftwerkstechnik finden.

Weitere wichtige Merkmale und Vorteile der Erfindung geben sich aus den Unteransprüchen, aus den Figuren sowie aus der zugehörigen Figurenbeschreibung.

Die vorliegende Erfindung wird anhand der beigefügten Figuren wie folgt näher erläutert. Hierzu zeigt:

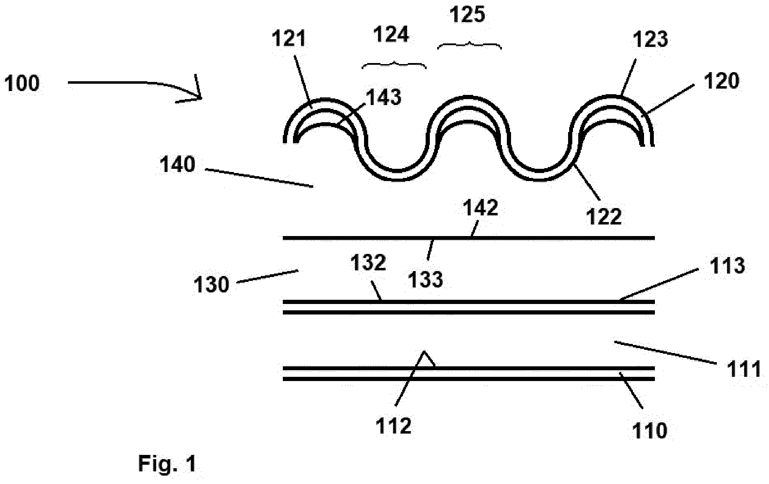

- Fig. 1: einen Ausschnitt einer schematischen Querschnittsansicht einer thermisch gedämmten Rohranordnung gemäß der vorliegenden Erfindung.

In der Fig. 1 ist ein Ausschnitt einer schematischen Querschnittsansicht einer thermisch gedämmten Rohranordnung 100 gezeigt.

Es ist in der Fig. 1 nur ein Ausschnitt der thermisch gedämmten Rohranordnung 100 gezeigt, die aber ohne weiteres auf Grund der achsensymmetrischen Ausbildung des hier gezeigten Ausführungsbeispiels gedanklich zu ergänzen ist.

Die thermisch gedämmte Rohranordnung 100 umfasst in diesem Ausführungsbeispiel ein Medienrohr 110 zur Aufnahme, Speicherung oder Leitung eines Fluids, ein das Medienrohr 110 umgebendes Wellrohr 120 als äußere Hülle, die den Außenmantel darstellt, wobei das Wellrohr 120 Wellrohrtäler 124 und Wellrohrberge 125 aufweist, eine erste Dämmschicht 130, die das Medienrohr 110 radial vollständig umhüllt, eine zweite Dämmschicht 140, die unterschiedlich zur ersten Dämmschicht 130 ist und die erste Dämmschicht 130 radial vollständig umhüllt, wobei die zweite Dämmschicht 140 an ihrer von der ersten Dämmschicht 130 abgewandten Außenoberfläche 143 mit Abschnitten der Wellrohrinnenoberfläche 112 des Wellrohrs 110 bevorzugt im Bereich der Wellrohrtäler 124 radial vollständig umlaufend fluiddicht verbunden ist. Im vorliegenden Ausführungsbeispiel gemäß der hier gezeigten Fig. 1 ist die zweite Dämmschicht 140 an ihrer von der ersten Dämmschicht 130 abgewandten Außenoberfläche 143 mit ca. 60 % der Wellrohrinnenoberfläche 112 des Wellrohrs 110 bevorzugt im Bereich der Wellrohrtäler 124 radial vollständig umlaufend fluiddicht verbunden.

Das Medienrohr 110 ist aus vernetztem Polyethylen (PE-X) gebildet, weist ein Lumen 111 zur Aufnahme, Speicherung oder Leitung eines Fluids auf, das von der Innenoberfläche 112 des Medienrohrs 110 begrenzt wird. An der Außenoberfläche 113 des Medienrohrs 110 ist eine erste Dämmschicht 130 angeordnet, die mit ihrer Innenoberfläche 132 an der Außenoberfläche 113 des Medienrohrs 110 anliegt. Die erste Dämmschicht 130 ist als dünne Platte aus PUR-Schaum ausgebildet, die eng um das Medienrohr 110 herumgelegt und an ihren hier nicht gezeigten Stoßkanten in axialer und in radialer Richtung verklebt ist. In einer alternativen Ausführung kann die Verklebung durch eine Verschweißung ersetzt sein oder durch eine Kombination aus einer Verklebung und einer Verschweißung. Es ist auch möglich, die erste Dämmschicht 130 aus PUR-Schaum durch Reaktion der den PUR-Schaum bildenden Komponenten direkt auf dem Medienrohr 110 zu erzeugen.

An der Außenoberfläche 133 der ersten Dämmschicht 130 ist eine zweite Dämmschicht 140 angeordnet, die mit ihrer Innenoberfläche 142 an der Außenoberfläche 133 der ersten Dämmschicht 140 anliegt. Die zweite Dämmschicht 140 ist als Folie aus geschlossenzelligen PE-Schaum ausgebildet, die eng um die erste Dämmschicht 130 herumgelegt und an ihren hier nicht gezeigten Stoßkanten in axialer und in radialer Richtung verklebt ist. In einer alternativen Ausführung kann die Verklebung durch eine Verschweißung ersetzt sein oder durch eine Kombination aus einer Verklebung und einer Verschweißung. Als Hülle ist bei der thermisch gedämmten Rohranordnung 100 ein Wellrohr 120 ausgebildet, dass durch einen Korrugationsfertigungsprozess hergestellt ist. Bei diesem Prozess wird die Wandung 121 des Wellrohrs 120 so geformt, dass abwechselnd Wellentäler 124 und Wellenberge 125 vorhanden sind, wobei die Wellentäler 124 nutartig sich in Richtung auf das Medienrohr 110, die Wellenberge 125 sich jedoch in die entgegengesetzte Richtung erstrecken. Sowohl Wellentäler 124, wie auch Wellenberge 125 sind radial vollständig umlaufend um das Wellrohr 120 ausgebildet. Die Außenoberfläche 143 der zweiten Dämmschicht 140 ist mit Abschnitten der Wellrohrinnenoberfläche 112 des Wellrohrs 110 bevorzugt im Bereich der Wellrohrtäler 124 radial vollständig umlaufend fluiddicht verbunden. Die Verbindung ist hierbei durch einen Schweißprozess zwischen der Außenoberfläche 143 der zweiten Dämmschicht 140 mit Abschnitten der Wellrohrinnenoberfläche 112 des Wellrohrs 110 bevorzugt im Bereich der Wellrohrtäler 124 erzeugt. Alternativ kann zur Herstellung der Verbindung aber auch eine Verklebung oder eine Kombination aus einer Verklebung und einer Verschweißung vorgesehen sein. Die zweite Dämmschicht 140 ragt bei der in Fig. 1 gezeigten Ausführung in den Freiraum unter der Wellrohrinnenoberfläche 123, der im Bereich eines Wellenberges 125 des Wellrohrs 120 vorhanden ist. Hierzu kann vorgesehen sein, dass bei der Herstellung der Rohranordnung 100 die zweite Dämmschicht 140 expandieren kann, indem diese beispielsweise vor der Expansion komprimiert wurde, oder indem beispielsweise die zweite Dämmschicht 140 ein aktivierbares Schaummittel enthält, das bei Aktivierung zu einer Expansion der zweiten Dämmschicht 140 führt und so dazu führt, dass die zweite Dämmschicht an ihrer von der ersten Dämmschicht abgewandten Außenoberfläche mit mindestens 30 % der Wellrohrinnenoberfläche des Wellrohrs bevorzugt im Bereich der Wellrohrtäler in Kontakt kommt und so radial vollständig umlaufend fluiddicht verbunden ist. Es versteht sich, dass sämtliche in der Fig. 1 dargestellten Schichtdicken - sei es der Rohre oder der Dämmschichten - nicht der Realität entsprechen, sondern nur zur Veranschaulichung der Erfindung gewählt wurden.

Auf diese Weise ist eine thermisch gedämmte Rohranordnung 100 in besonders einfacher und schneller sowie kostengünstiger Herstellungstechnik bereitgestellt, die eine besonders sichere Sperre gegen das unkontrollierte Ausbreiten von Feuchtigkeit oder Wasser in den Dämmschichten 130, 140 bei einer etwaigen Beschädigung gewährleistet.

### Bezugszeichenliste

- 100: Thermisch gedämmte Rohranordnung
- 110: Medienrohr
- 111: Lumen
- 112: Innenoberfläche
- 113: Außenoberfläche
- 120: Wellrohr
- 121: Wandung
- 122: Wellrohrinnenoberfläche
- 123: Wellrohraußenoberfläche
- 124: Wellental
- 125: Wellenberg
- 130: erste Dämmschicht
- 132: Innenoberfläche
- 133: Außenoberfläche
- 140: zweite Dämmschicht
- 142: Innenoberfläche
- 143: Außenoberfläche

## Patentansprüche

1. Thermisch gedämmte Rohranordnung (100), umfassend wenigstens ein Medienrohr (110) zur Aufnahme, Speicherung oder Leitung eines Fluids, ein das wenigstens eine Medienrohr (110) umgebendes Wellrohr (120) als äußere Hülle, wobei das Wellrohr (120) Wellrohrtäler (124) und Wellrohrberge (125) aufweist, eine erste Dämmschicht (130), die das wenigstens eine Medienrohr (110) radial vollständig umhüllt, eine zweite Dämmschicht (140), die unterschiedlich zur ersten Dämmschicht (130) ist und die erste Dämmschicht (130) radial vollständig umhüllt, **dadurch gekennzeichnet, dass** die zweite Dämmschicht (140) an ihrer von der ersten Dämmschicht (130) abgewandten Außenoberfläche (143) mit mindestens 30 % der Wellrohrinnenoberfläche (122) des Wellrohrs (120) bevorzugt im Bereich der Wellrohrtäler (124) radial vollständig umlaufend fluiddicht verbunden ist.

2. Thermisch gedämmte Rohranordnung (100) nach Anspruch 1, **dadurch gekennzeichnet, dass** die fluiddichte Verbindung der zweiten Dämmschicht (140) mit dem Wellrohr (120) eine Verschweißung und / oder eine Verklebung ist.

3. Thermisch gedämmte Rohranordnung (100) nach einem der Ansprüche 1 oder 2, **dadurch gekennzeichnet, dass** die erste Dämmschicht (130) ein PUR-Schaum ist.

4. Thermisch gedämmte Rohranordnung (100) nach einem der vorangehenden Ansprüche, **dadurch gekennzeichnet, dass** die zweite Dämmschicht (140) eine PE-Schaumfolie ist.

5. Thermisch gedämmte Rohranordnung (100) nach einem der vorangehenden Ansprüche, **dadurch gekennzeichnet, dass** bevorzugt mindestens 40 % und besonders bevorzugt mindestens 50 % der Wellrohrinnenoberfläche (122) des Wellrohrs (120) mit der zweiten Dämmschicht (140) verbunden sind.

6. Thermisch gedämmte Rohranordnung (100) nach einem der vorangehenden Ansprüche, **dadurch gekennzeichnet, dass** 2, 3 oder 4 Medienrohre (110) im Wellrohr (120) vorgesehen sind.

7. Thermisch gedämmte Rohranordnung (100) nach einem der vorangehenden Ansprüche, **dadurch gekennzeichnet, dass** das wenigstens eine Medienrohr (110) und / oder das Wellrohr (120) aus einem Polymermaterial bestehen oder ein solches enthalten, wobei das Polymermaterial ausgewählt ist aus einem Thermoplasten, insbesondere aus einem Polyolefin, und besonders bevorzugt aus einem Polypropylen, einem Polyethylen oder einem vernetzten Polyethylen.

8. Wärmeverteilsystem mit wenigstens einer thermisch gedämmten Rohranordnung (100) nach einem der Ansprüche 1 bis 7.

## Claims

1. A thermally insulated pipe assembly (100), comprising at least one media pipe (110) for receiving, storing or carrying a fluid, a corrugated pipe (120) surrounding the at least one media pipe (110) as an outer jacket, wherein the corrugated pipe (120) has corrugated pipe valleys (124) and corrugated pipe peaks (125), a first insulating layer (130) which completely radially encloses the at least one media pipe (110), a second insulating layer (140), which is different from the first insulating layer (130) and which completely radially encloses the first insulating layer (130), **characterised in that** the second insulating layer (140), on the outer surface (143) thereof facing away from the first insulating layer (130), is radially connected around the entire circumference in a fluid-tight manner to at least 30% of the corrugated pipe inner surface (122) of the corrugated pipe (120), preferably in the region of the corrugated pipe valleys (124).

2. The thermally insulated pipe assembly (100) according to claim 1, **characterised in that** the fluid-tight connection of the second insulating layer (140) to the corrugated pipe (120) is a welded connection and/or a bonded connection.

3. The thermally insulated pipe assembly (100) according to one of claims 1 or 2, **characterised in that** the first insulating layer (130) is a PUR foam.

4. The thermally insulated pipe assembly (100) according to one of the preceding claims, **characterised in that** the second insulating layer (140) is a PE foam film.

5. The thermally insulated pipe assembly (100) according to one of the preceding claims, **characterised in that** preferably at least 40% and particularly preferably at least 50% of the corrugated pipe inner surface (122) of the corrugated pipe (120) is connected to the second insulating layer (140).

6. The thermally insulated pipe assembly (100) according to one of the preceding claims, **characterised in that** two, three or four media pipes (110) are provided in the corrugated pipe (120).

7. The thermally insulated pipe assembly (100) according to one of the preceding claims, **characterised in that** the at least one media pipe (110) and/or the corrugated pipe (120) consist of or contain a polymer material, wherein the polymer material is selected from a thermoplastic material, in particular from a polyolefin, and particularly preferably from a polypropylene, a polyethylene or a crosslinked polyethylene.

8. A heat distribution system comprising at least one thermally insulated pipe assembly (100) according to one of claims 1 to 7.

## Revendications

1. Agencement de tube (100) à isolation thermique, comprenant au moins un tube pour fluide (110) destiné à recevoir, stocker ou conduire un fluide, un tube ondulé (120) entourant l'au moins un tube pour fluide (110) sous la forme d'une enveloppe extérieure, le tube ondulé (120) présentant des creux de tube ondulé (124) et des bosses de tube ondulé (125), une première couche isolante (130) qui enveloppe entièrement de manière radiale l'au moins un tube pour fluide (110), une seconde couche isolante (140) qui est différente de la première couche isolante (130) et enveloppe entièrement de manière radiale la première couche isolante (130), **caractérisé en ce que** la seconde couche isolante (140) est reliée, de manière radialement étanche aux fluides sur toute la périphérie, au niveau de sa surface extérieure (143) orientée dans la direction opposée à la première couche isolante (130), à au moins 30 % de la surface intérieure de tube ondulé (122) du tube ondulé (120), de préférence dans la zone des creux de tube ondulé (124).

2. Agencement de tube (100) à isolation thermique selon la revendication 1, **caractérisé en ce que** la liaison étanche aux fluides entre la seconde couche isolante (140) et le tube ondulé (120) est une soudure et/ou un collage.

3. Agencement de tube (100) à isolation thermique selon l'une des revendications 1 ou 2, **caractérisé en ce que** la première couche isolante (130) est une mousse PUR.

4. Agencement de tube (100) à isolation thermique selon l'une des revendications précédentes, **caractérisé en ce que** la seconde couche isolante (140) est un film en PE expansé.

5. Agencement de tube (100) à isolation thermique selon l'une des revendications précédentes, **caractérisé en ce que** de préférence au moins 40 % et de manière particulièrement préférée au moins 50 % de la surface intérieure de tube ondulé (122) du tube ondulé (120) est reliée à la seconde couche isolante (140).

6. Agencement de tube (100) à isolation thermique selon l'une des revendications précédentes, **caractérisé en ce que** 2, 3 ou 4 tubes pour fluide (110) sont prévus dans le tube ondulé (120).

7. Agencement de tube (100) à isolation thermique selon l'une des revendications précédentes, **caractérisé en ce que** l'au moins un tube pour fluide (110) et/ou le tube ondulé (120) sont constitués de ou contiennent un matériau polymère, le matériau polymère étant choisi parmi un thermoplastique, en particulier une polyoléfine, et de manière particulièrement préférée un polypropylène, un polyéthylène ou un polyéthylène réticulé.

8. Système de distribution de chaleur comportant au moins un agencement de tube (100) à isolation thermique selon l'une des revendications 1 à 7.
